# FASCICULE DE BREVET EUROPEEN

(11) **EP 2 553 422 B1**
(45) Date de publication et mention de la délivrance du brevet: **02.07.2014**
(21) Numéro de dépôt: 11717307.0
(22) Date de dépôt: 01.04.2011
(51) Int. Cl.: G01N 1/36, G01N 33/20

(54) **PROCEDE D'ANALYSE D'UNE PLURALITE DE PARTICULES FERROMAGNETIQUES**
VERFAHREN ZUR ANALYSE EINER VIELZAHL VON FERROMAGNETISCHEN PARTIKELN
METHOD FOR ANALYSING A PLURALITY OF FERROMAGNETIC PARTICLES

(30) Priorité: 02.04.2010 FR 1052524
(43) Date de publication de la demande: 06.02.2013
(73) Titulaire: Snecma, 75015 Paris (FR)
(72) Inventeur: COLLADON, Fabrice, F-77190 Dammarie-Les-Lys (FR)
(74) Mandataire: Berbinau, Pierre Jean Marie
(86) Numéro de dépôt international: PCT/FR2011/050739
(87) Numéro de publication internationale: WO 2011/121254

(56) Documents cités:
- WO-A2-2008/057066
- JP-A- 58 168 939
- DEN BROEDER F J A ET AL: "Coercive force and stability of SmCo5 and GdCo5", JOURNAL OF THE LESS-COMMON METALS, ELSEVIER-SEQUOIA S.A. LAUSANNE, CH, vol. 29, no. 1, 1 septembre 1972 (1972-09-01), pages 65-71, XP022739882, ISSN: 0022-5088, DOI: DOI:10.1016/0022-5088(72)90147-6 [extrait le 1972-09-01]
- KUTCHKO B G ET AL: "Fly ash characterization by SEM-EDS", FUEL, IPC SCIENCE AND TECHNOLOGY PRESS, GUILDFORD, GB, vol. 85, no. 17-18, 1 décembre 2006 (2006-12-01), pages 2537-2544, XP025235868, ISSN: 0016-2361, DOI: DOI:10.1016/J.FUEL.2006.05.016 [extrait le 2006-12-01]
- YONGCHUN ZHAO ET AL: "Mineralogy, Chemical Composition, and Microstructure of Ferrospheres in Fly Ashes from Coal Combustion", ENERGY & FUELS, vol. 20, no. 4, 1 July 2006 (2006-07-01), pages 1490-1497, XP055077559, ISSN: 0887-0624, DOI: 10.1021/ef060008f

## Description

La présente invention concerne un procédé d'analyse d'une pluralité de particules ferromagnétiques.

Un dispositif au sein duquel un fluide circule dans un circuit peut, en fonctionnement, libérer dans ce fluide des particules, métalliques ou non. Ce dispositif est par exemple un moteur, notamment un moteur d'avion (turbomachine), et ce circuit est par exemple un circuit de refroidissement ou de lubrification. Les particules polluent le fluide et doivent être retirées de ce circuit. Pour cela, on utilise des bouchons magnétiques et/ou des filtres placés sur le circuit, qui piègent les particules de telle sorte que ces particules peuvent être retirées du circuit et donner lieu à des analyses.

Ces particules proviennent en général de diverses pièces composant le moteur (ou le dispositif), de par l'usure, ou la détérioration de ces pièces. Lorsqu'on récupère des particules dans un circuit, il est donc primordial d'identifier les pièces d'où elles proviennent, de façon à, si nécessaire, inspecter ces pièces et le cas échéant les remplacer.

Pour identifier les origines des particules, il est donc nécessaire d'effectuer l'analyse de chacune de ces particules.

Cette analyse consiste à déterminer la nature de ces particules (métallique, céramique, polymère) et le cas échéant leur microstructure de façon à identifier précisément de quelles pièces elles proviennent. Dans l'immense majorité des cas, on ne s'intéresse qu'aux particules ferromagnétiques, car les pièces dont on cherche à savoir si elles sont endommagées ou usées sont ferromagnétiques.

Actuellement, les particules piégées par les bouchons magnétiques ou les filtres sont récupérées, puis certaines particules sont sélectionnées aléatoirement et analysées au spectromètre (Energy Dispersive Spectrometer ou EDS) et au microscope électronique à balayage (MEB) afin de déterminer leur composition chimique. Etant donné que des centaines, voire des milliers de particules, dont la taille est de l'ordre du millimètre, sont récupérées, seules quelques dizaines peuvent dans un temps et pour un coût raisonnable, être analysées.

Cette méthode présente les inconvénients suivants :

Les particules analysées sont nécessairement sélectionnées au hasard, car il est impossible de déterminer les types d'alliages métalliques à partir de leur aspect de surface. La plupart du temps, les particules provenant de nombreuses pièces distinctes ne sont donc même pas analysées. La méthode d'analyse actuelle ne permet donc pas de déterminer de manière exhaustive les catégories de pièces métalliques qui sont usées ou endommagées.

L'examen de la surface d'une particule donnée au MEB et au spectromètre EDS ne donne aucune indication sur l'état métallurgique de la particule, en particulier sur son historique métallurgique (traitements thermiques antérieurs) et ses modifications microstructurales, ce qui est limitatif,

Dans le cas où la surface de la particule est distincte du reste de la particule (par exemple parce que la particule est revêtue de corps étrangers provenant d'une autre pièce suite à un frottement, ou parce que la particule est oxydée, ou parce que la particule provient de la surface d'une pièce ayant subi à l'origine un traitement de surface) l'examen de la surface de cette particule au MEB et au spectromètre EDS ne révèle pas la nature du reste de la particule, c'est-à-dire sa nature originelle.

En outre, tel que décrit dans Den Broeder, F. et al, "Coercive force and stability of SmCo5 and GdCo5", Journal of the Less-Common Metals, vol. 29 (1972) pages 65-71, il est possible dans le cas de particules ferromagnétiques de révéler le coeur desdites particules en appliquant un champ magnétique qui aligne les particules dans la même direction, en enrobant les particules ainsi alignées et en polissant les particules enrobées jusqu'à révéler leur coeur.

Ces manques de précision d'analyse de la méthode actuelle ont déjà conduit à des démontages inutiles et très coûteux de moteurs d'avions parce que les pièces endommagées n'avaient pas été correctement identifiées, ou ont conduit à une panne de moteur parce qu'une pièce défectueuse n'avait pas été changée à temps.

L'invention vise à proposer un procédé qui permet de fiabiliser l'analyse des particules ferromagnétiques récupérées par des filtres ou des bouchons magnétiques.

Ce but est atteint grâce au fait que le procédé comporte les étapes suivantes :
(a) placer les particules dans un récipient puis aligner les particules de la pluralité de telle sorte que chacune des particules est orientée sensiblement dans la même direction,
(b) figer les particules de cette pluralité dans cet alignement en versant dans ledit récipient un matériau qui enrobe et noie lesdites particules et qui, en se solidifiant, fige lesdites particules en position alignée.
(c) exposer la région interne des particules ainsi alignées,
(d) déterminer la nature de chacune des particules et grouper les particules par catégories en fonction de leur nature,
(e) après l'étape (d), déterminer, dans chaque catégorie, la structure métallurgique et la composition chimique d'une ou plusieurs des particules.

Grâce à ces dispositions, la région interne de chaque particule est mise à nu et peut ultérieurement être analysée directement, et donc on résoud les difficultés (présence de traitement ou revêtement de surface sur les particules, contamination de la surface des particules par des corps étrangers, ...) qui faussent les analyses dans les procédés selon l'art antérieur.

De plus, il est possible de dénombrer et d'analyser les catégories de particules métalliques, et par association de cerner avec précision la ou les pièces incriminées d'où proviennent certaines de ces particules.

Par exemple, à l'étape (a), on aligne ces particules en les plaçant dans un champ magnétique dans la région de ce champ où les lignes de champs sont parallèles.

On obtient ainsi de façon aisée et répétitive un alignement des particules ferromagnétiques selon la même direction, qui est la direction des lignes de champ magnétique B.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1A est une vue schématique illustrant l'étape (a) du procédé selon l'invention, ,
- la figure 1B est une vue schématique illustrant l'étape (b) du procédé selon l'invention, ,
- la figure 1C est une vue schématique illustrant l'étape (c) du procédé selon l'invention,
- la figure 1D est une vue schématique illustrant l'étape (d) du procédé selon l'invention,
- la figure 1E est une vue schématique illustrant l'étape (e) du procédé selon l'invention,
- la figure 2 est une photographie d'une particule analysée avec le procédé selon l'invention.

Des particules ferromagnétiques 1 sont récoltées par des filtres et/ou des bouchons magnétiques et sont rassemblées, formant ainsi une pluralité de particules.

On aligne toutes les particules 1 de la pluralité en une seule étape de telle sorte que chacune des particules 1 est orientée sensiblement dans la même direction.

Par exemple, chacune des particules 1 s'étend dans un plan principal (P), et, à l'étape (a), les plans principaux (P) sont tous sensiblement alignés.

Par plan principal (P) d'une particule 1, on entend le plan dans lequel cette particule s'étend principalement, c'est-à-dire que si l'on place la particule entre 2 plans parallèles et tangents à cette particule, alors ces 2 plans sont parallèles au plan (P) lorsque leur distance est minimale.

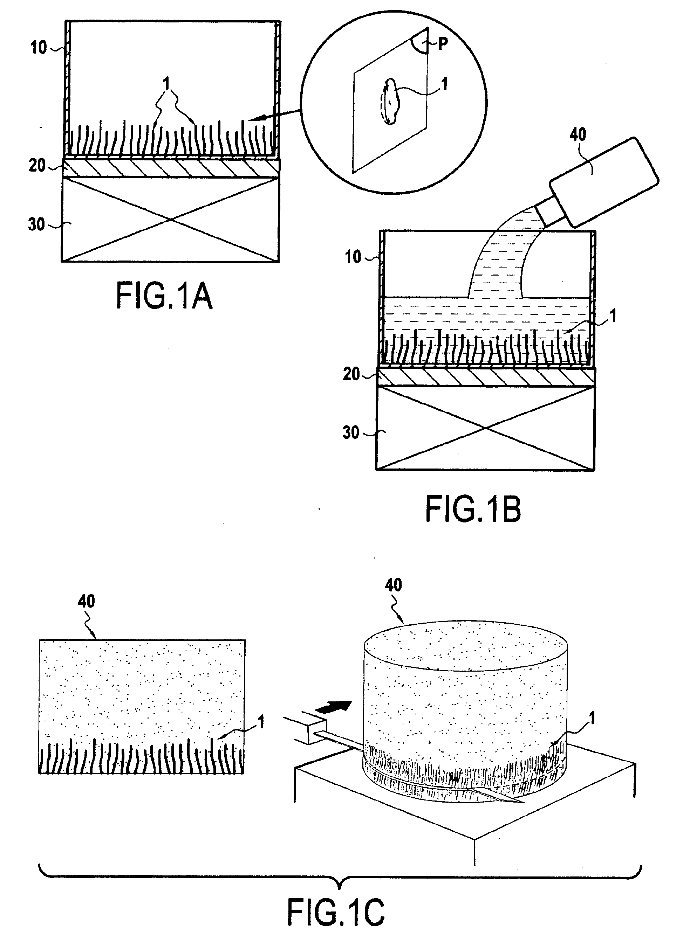

La figure 1A montre le plan (P) pour une particule 1 de forme quelconque.

Cet alignement peut être réalisé à l'aide d'un aimant, comme expliqué ci-dessous.

Pour obtenir l'alignement des particules 1 (étape (a) du procédé selon l'invention), on dépose ces particules 1 au fond d'un récipient 10 amagnétique. On pose ce récipient 10 sur un aimant 30. Les particules 1 sont ainsi baignées dans le champ magnétique généré par l'aimant 30, et se répartissent en s'alignant sensiblement simultanément le long des lignes L de ce champ magnétique. Au niveau du fond du récipient 10 sur lequel les particules 1 sont posées, les lignes de champ L sont sensiblement parallèles entre elles, et perpendiculaires au fond du récipient 10, de telle sorte que les particules 1 s'alignent perpendiculairement au fond du récipient 10.

Les particules 1 sont ainsi dressées perpendiculairement au fond du récipient, comme représenté sur la figure 1A.

Par exemple, les particules 1 sont alignées de telle sorte qu'une des dimensions principales de chacune des particules 1 est sensiblement perpendiculaire au fond du récipient.

Si nécessaire, on intercale entre l'aimant 30 et le récipient 10 une cale 20 amagnétique qui éloigne le récipient 10 de l'aimant 30 de telle sorte qu'au niveau du fond du récipient 10, les lignes de champ L sont sensiblement parallèles entre elles, et perpendiculaires au fond du récipient 10.

Par exemple, l'aimant 30 utilisé a un champ magnétique de l'ordre de 50 A/m.

Ce procédé permet d'aligner aisément et en une seule étape, un grand nombre de particules.

Ainsi, le procédé selon l'invention est plus rapide, et donc moins coûteux que les procédés selon l'art antérieur.

Avantageusement, le récipient 10 est transparent, ce qui permet de vérifier que les particules 10 sont bien alignées.

Les inventeurs ont constaté que si, avant de placer les particules dans le champ magnétique de l'aimant 20, on place le récipient contenant ces particules 1 dans un démagnétiseur, alors, avantageusement, les particules 1 ont tendance à s'écarter les unes des autres, ce qui évite leur chevauchement, et facilite leur analyse métallurgique ultérieure.

Alternativement on peut utiliser des moyens autres que magnétiques pour écarter les particules 1 avant de les aligner.

L'utilisation d'un champ magnétique pour aligner les particules 1 n'est qu'un des moyens permettant d'obtenir cet alignement.

Ensuite, pour figer les particules 1 dans leur position dressée (alignée), on verse dans le récipient 10 un matériau 40 qui enrobe et noie les particules 1, comme représenté en figure 1B. Le matériau 40 est suffisamment liquide pour enrober entièrement chacune des particules 1, sans modifier la position des particules 1, et est apte à se solidifier.

Par exemple ce matériau 40 est une résine.

Une fois les particules 1 entièrement noyées dans le matériau 40, on laisse le matériau 40 se solidifier, les particules 1 étant alors, à l'issue du processus de solidification, figées de façon permanente en position dressée. Cette étape (b) du procédé selon l'invention est illustrée en figure 1B.

Pendant toute la durée de l'opération d'enrobage et jusqu'à la solidification complète de la résine 40, on maintient les particules 1 baignées dans le champ magnétique, de façon à ce que les particules 1 soient maintenues en position dressée.

Avantageusement, on utilise de la résine 40 transparente ou translucide, de façon à visualiser la position des particules 1.

Par exemple, la résine 40 est une résine époxy transparente.

On retire ensuite la résine 40 solidifiée du récipient 10. Puis on découpe ou poli le bloc de résine 40 dans un plan perpendiculaire à la direction d'alignement des particules 1. Cette étape (c) du procédé selon l'invention est représentée à la figure 1C.

Etant donné que les particules 1, au moment de leur enrobage prenaient toutes appui sur le fond du récipient 10, les particules 1 sont toutes situées dans une même tranche du bloc de résine 40 (tranche qui était au contact du fond du récipient 10). Ce positionnement des particules 1 permet, en coupant le bloc de résine 40 dans cette tranche, de couper en une seule étape toutes les particules 1, d'où un gain de temps.

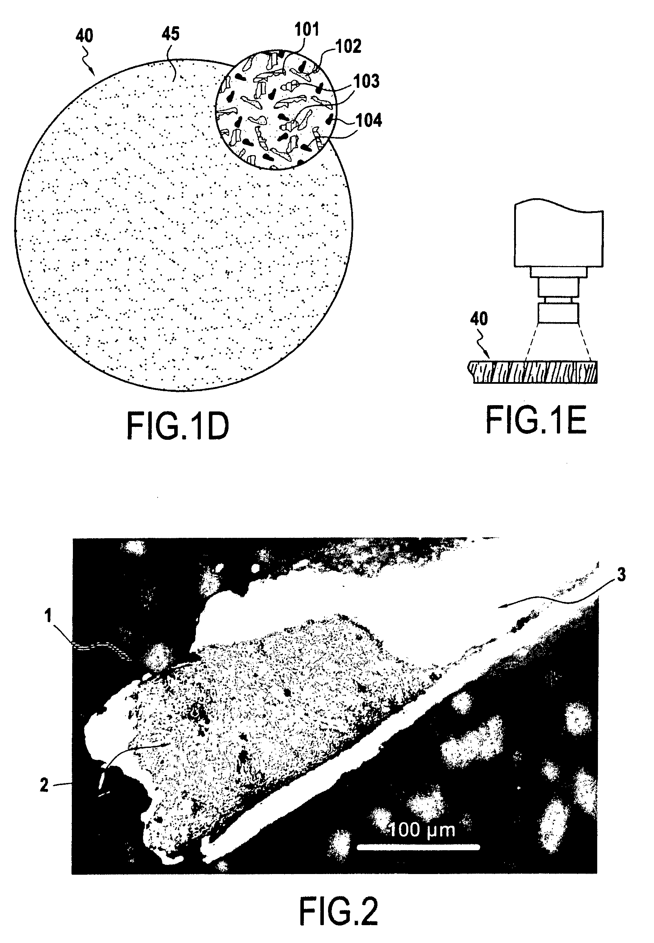

De plus, les particules 1 étant toutes alignées perpendiculairement au plan de coupe, la face de découpe 45 (plan de coupe du bloc 40, voir figure 1D) passe par une partie centrale de chacune des particules 1, ce qui permet d'exposer (mettre à nu) leur région interne (coeur). Ainsi, pour chacune des particules 1 dont on effectuera ultérieurement l'analyse (étapes (d) et (e)), on est certain que cette analyse sera bien ciblée sur le matériau constituant le coeur de cette particule (et par conséquent sur le matériau constituant la pièce d'où provient cette particule), et non sur un éventuel revêtement ou matériau de surface sur cette particule 1.

De plus, la résine 40 permet de maintenir fermement les particules 1 pendant le processus de découpe, et évite ainsi que certaines particules 1 deviennent non-alignées.

Alternativement, le bloc de résine 40 peut être raboté jusqu'à ce que la région interne de chacune des particules soit exposée.

Ainsi, selon l'invention, on expose la région interne des particules 1 en une seule étape.

Après l'étape (c), on effectue une première analyse (étape (d)) qui révèle la nature de l'alliage constituant chacune des particules 1, c'est-à-dire la catégorie à laquelle chaque alliage appartient. Pour déterminer si une particule 1 donnée appartient à une certaine catégorie, on effectue un test qui permet d'identifier cette catégorie, c'est-à-dire qui soit représentatif de cette catégorie.

Grâce au procédé selon l'invention, les régions internes de toutes les particules 1 sont accessibles et visibles simultanément sur la face de découpe 45 du bloc de résine 40. Chaque test caractéristique d'une catégorie permet donc de révéler en une seule étape toutes les particules appartenant à cette catégorie, d'où un gain de temps. En effectuant successivement plusieurs tests, chaque test étant représentatif d'une catégorie d'alliages, on détermine la catégorie à laquelle chacune des particules appartient.

Par exemple, les tests sont effectués avec des réactifs chimiques qui permettent de révéler la nature de chacune des particules 1.

La figure 1D illustre schématiquement un exemple de résultat de tests effectués avec trois réactifs connus sur la face de découpe 45 du bloc de résine 40 : réactif n°1 (Nital 2), réactif n°2 (Nital 6), réactif n°3 (15/15). Ces désignations sont connues par l'homme du métier. Les aciers non alliés réagissent au réactif n°1 (particules référencées 101 sur la figure 1D), les aciers faiblement alliés (référencés 102 sur la figure 1D) réagissent au réactif n°2, et les aciers fortement alliés (particules référencées 103 sur la figure 1D) réagissent au réactif n°3. Les particules qui ne sont attaquées par aucun de ces réactifs (particules référencées 104 sur la figure 1D) sont en d'autres aciers, ou d'autres alliages.

On sélectionne les réactifs de telle sorte que chaque catégorie associée à chaque réactif regroupe des matériaux correspondant à une catégorie particulière de pièces (par exemple la catégorie des aciers à roulements). Ainsi, on sait que toutes les particules réagissant à un réactif donné proviennent nécessairement de cette catégorie de pièces.

Avantageusement, on utilise à l'étape (d) un microscope optique après l'application des réactifs chimiques de façon à déterminer de façon plus précise la nature de chacune des particules 1.

Afin d'identifier plus précisément l'origine de certaines des particules, on effectue une seconde analyse (étape (e)) sur une ou quelques particules sélectionnées dans chaque catégorie identifiée lors de la première analyse. Avantageusement, il n'est pas nécessaire d'effectuer l'analyse de toutes les particules de chaque catégorie, car on sait déjà, grâce à la première analyse, que les particules appartenant à une même catégorie sont sensiblement identiques.

Cette seconde analyse a pour objectif de déterminer la structure métallurgique et la composition chimique de chacune des particules sélectionnées. Ainsi, on peut déterminer précisément de quelle pièce dans le moteur (ou le dispositif mécanique) provient une particule analysée, en recoupant les résultats de cette seconde analyse avec la position du filtre ou du bouchon magnétique où a été récolté la particule analysée, et les pièces présentes sur le trajet du circuit de fluide passant par ce filtre ou bouchon magnétique.

Avantageusement, on utilise un microscope électronique et un spectromètre pour déterminer, dans chaque catégorie, la structure métallurgique et la composition chimique d'une ou de plusieurs des particules 1.

Dans le procédé selon l'art antérieur, l'analyse par spectromètre EDS ne peut pas quantifier le carbone dans un alliage métallique, donc cette analyse ne permet pas de différentier entre deux alliages dont la teneur en carbone est très différente mais la composition en éléments alliés similaire ou proche. Par exemple, cette analyse ne permet pas de différentier entre un acier de boulonnerie et un acier à roulement, et peut donc conduire à une conclusion erronée sur la provenance réelle des particules.

En revanche, dans le procédé selon l'invention, étant donné que grâce à la première analyse (étape (a)) on connaît déjà qualitativement, au moins en partie, la composition d'une particule donnée (par exemple sa teneur en carbone), les analyses au microscope électronique et au spectromètre (figure 1E) durant la seconde analyse permettent de conclure de façon fiable quant à la composition chimique et à la microstructure de cette particule.

Par exemple, les particules sont analysées au spectromètre (Energy Dispersive Spectrometer ou EDS) et au microscope électronique à balayage (MEB) afin de déterminer leur composition chimique et leur microstructure.

La figure 2 est une photographie d'une particule 1 analysée avec le procédé selon l'invention, après son examen à l'étape (e).

La surface de cette particule 1 est recouverte d'un revêtement d'argent 3. Ainsi, une analyse de cette particule par un procédé selon l'art antérieur reviendrait à analyser uniquement sa surface, et conclurait erronément que cette particule est composée d'argent.

Le coeur 2 de cette particule 1 est mis à nu par le procédé selon l'invention. L'analyse de ce coeur 2 au microscope électronique et au spectromètre EDS révèle que ce coeur est un acier faiblement allié, avec une microstructure martensitique, à l'état trempé revenu.

On en conclut que la particule 1 provient d'un acier de cage de roulement 40NCD7. La présence de cette particule 1 permet de conclure à un endommagement d'un roulement se trouvant sur le trajet du circuit de fluide passant par le bouchon magnétique où a été récolté la particule 1. Il est donc nécessaire de démonter et de changer ce roulement.

## Revendications

1. Procédé d'analyse d'une pluralité de particules (1) ferromagnétiques **caractérisé en ce qu'**il comporte les étapes suivantes :
(a) placer les particules (1) dans un récipient (10), puis aligner les particules (1) de ladite pluralité de telle sorte que chacune desdites particules est orientée sensiblement dans la même direction,
(b) figer les particules (1) de ladite pluralité dans cet alignement en versant dans ledit récipient (10) un matériau (40) qui enrobe et noie lesdites particules et qui, en se solidifiant, fige lesdites particules en position alignées,
(c) exposer la région interne desdites particules (1) ainsi alignées,
(d) déterminer la nature de l'alliage constituant chacune desdites particules (1) et grouper lesdites particules par catégories en fonction de leur nature,
(e) après l'étape (d), déterminer, dans chaque catégorie, la structure métallurgique et la composition chimique d'une ou plusieurs desdites particules (1).

2. Procédé d'analyse d'une pluralité de particules selon la revendication 1, **caractérisé en ce que**, à l'étape (a), toutes les particules sont alignées en une seule étape.

3. Procédé d'analyse d'une pluralité de particules selon la revendication 1 ou 2, **caractérisé en ce que**, à l'étape (c), la région interne desdites particules (1) est exposée en une seule étape.

4. Procédé d'analyse d'une pluralité de particules (1) selon l'une quelconque des revendications 1 à 3, **caractérisé en ce que** chacune desdites particules (1) s'étend dans un plan principal (P), et **en ce que**, à l'étape (a), lesdits plans principaux sont tous sensiblement alignés.

5. Procédé d'analyse d'une pluralité de particules (1) selon l'une quelconque des revendications 1 à 4, **caractérisé en ce que**, à l'étape (a), lesdites particules sont alignées en les plaçant dans un champ magnétique dans la région de ce champ où les lignes de champs (L) du champ magnétique sont parallèles.

6. Procédé d'analyse d'une pluralité de particules (1) selon la revendication 5, **caractérisé en ce que**, pour placer lesdites particules dans ledit champ magnétique, lesdites particules sont placées dans un récipient (10) amagnétique posé au-dessus d'un aimant (30).

7. Procédé d'analyse d'une pluralité de particules (1) selon la revendication 6 **caractérisé en ce qu'**une cale (20) amagnétique est intercalée entre ledit aimant (30) et ledit récipient (10).

8. Procédé d'analyse d'une pluralité de particules (1) selon l'une quelconque des revendications 1 à 7, **caractérisé en ce que**, à l'étape (c), la région interne de chacune desdites particules (1) est exposée en coupant les particules dans un plan perpendiculaire à leur direction d'alignement.

9. Procédé d'analyse d'une pluralité de particules (1) selon l'une quelconque des revendications 1 à 8, **caractérisé en ce que**, à l'étape (a), lesdites particules (1) sont écartées avant d'être alignées.

10. Procédé d'analyse d'une pluralité de particules (1) selon la revendication 9, **caractérisé en ce que** lesdites particules (1) sont placées dans un démagnétiseur afin d'être écartées.

11. Procédé d'analyse d'une pluralité de particules (1) selon l'une quelconque des revendications 1 à 10, **caractérisé en ce que**, à l'étape (d), un ou plusieurs réactifs chimiques sont appliqués sur lesdites particules (1) de façon à révéler la nature de chacune desdites particules.

12. Procédé d'analyse d'une pluralité de particules (1) selon la revendication 11 **caractérisé en ce que**, à l'étape (d), un microscope optique est utilisé après l'application desdits réactifs chimiques pour déterminer la nature de chacune desdites particules (1).

13. Procédé d'analyse d'une pluralité de particules (1) selon l'une quelconque des revendications 1 à 12, **caractérisé en ce que**, à l'étape (e), un microscope électronique et un spectromètre sont utilisés pour déterminer, dans chaque catégorie, la structure métallurgique et la composition chimique d'une ou plusieurs desdites particules (1).

## Patentansprüche

1. Verfahren zur Analyse einer Vielzahl von ferromagnetischen Partikeln (1), **dadurch gekennzeichnet, dass** es die folgenden Schritte umfasst:
(a) Einbringen der Partikel (1) in einen Behälter (10), anschließend Ausrichten der Partikel (1) der Vielzahl derart, dass ein jedes der Partikel im Wesentlichen in die gleiche Richtung gerichtet ist,
(b) Festlegen der Partikel (1) der Vielzahl in dieser Ausrichtung dadurch, dass in den Behälter (10) ein Material (40) gegossen wird, das die Partikel umhüllt und tränkt und das durch sein Verfestigen die Partikel in der ausgerichteten Position festlegt,
(c) Freilegen des inneren Bereichs der so ausgerichteten Partikel (1),
(d) Bestimmen der Art der Legierung, die ein jedes der Partikel (1) bildet, und kategorienweises Gruppieren der Partikel in Abhängigkeit ihrer Art,
(e) nach Schritt (d), Bestimmen der metallurgischen Struktur und der chemischen Zusammensetzung von einem oder mehreren der Partikel (1) in jeder Kategorie.

2. Verfahren zur Analyse einer Vielzahl von Partikeln nach Anspruch 1, **dadurch gekennzeichnet, dass** bei Schritt (a) alle Partikel in einem einzigen Schritt ausgerichtet werden.

3. Verfahren zur Analyse einer Vielzahl von Partikeln nach Anspruch 1 oder 2, **dadurch gekennzeichnet, dass** bei Schritt (c) der innere Bereich der Partikel (1) in einem einzigen Schritt freigelegt wird.

4. Verfahren zur Analyse einer Vielzahl von Partikeln (1) nach einem der Ansprüche 1 bis 3, **dadurch gekennzeichnet, dass** ein jedes der Partikel (1) sich in einer Hauptebene (P) erstreckt und dass bei Schritt (a) die Hauptebenen alle im Wesentlichen ausgerichtet sind.

5. Verfahren zur Analyse einer Vielzahl von Partikeln (1) nach einem der Ansprüche 1 bis 4, **dadurch gekennzeichnet, dass** bei Schritt (a) die Partikel dadurch ausgerichtet werden, dass sie in einem Magnetfeld in dem Bereich dieses Feldes platziert werden, in dem die Feldlinien (L) des Magnetfeldes parallel sind.

6. Verfahren zur Analyse einer Vielzahl von Partikeln (1) nach Anspruch 5, **dadurch gekennzeichnet, dass** zum Platzieren der Partikel in dem Magnetfeld die Partikel in einen nicht magnetischen Behälter (10), der oberhalb eines Magneten (30) abgestellt wird, eingebracht werden.

7. Verfahren zur Analyse einer Vielzahl von Partikeln (1) nach Anspruch 6, **dadurch gekennzeichnet, dass** ein nicht magnetischer Keil (20) zwischen dem Magnet (30) und dem Behälter (10) angeordnet ist.

8. Verfahren zur Analyse einer Vielzahl von Partikeln (1) nach einem der Ansprüche 1 bis 7, **dadurch gekennzeichnet, dass** bei Schritt (c) der innere Bereich eines jeden der Partikel (1) dadurch freigelegt wird, dass die Partikel in einer Ebene senkrecht zu ihrer Ausrichtungsrichtung geschnitten werden.

9. Verfahren zur Analyse einer Vielzahl von Partikeln (1) nach einem der Ansprüche 1 bis 8, **dadurch gekennzeichnet, dass** bei Schritt (a) die Partikel (1) beabstandet werden, bevor sie ausgerichtet werden.

10. Verfahren zur Analyse einer Vielzahl von Partikeln (1) nach Anspruch 9, **dadurch gekennzeichnet, dass** die Partikel (1) in ein Entmagnetisierungsgerät eingebracht werden, um beabstandet zu werden.

11. Verfahren zur Analyse einer Vielzahl von Partikeln (1) nach einem der Ansprüche 1 bis 10, **dadurch gekennzeichnet, dass** bei Schritt (d) ein oder mehrere chemische Reagenzien auf die Partikel (1) aufgebracht werden, um die Art eines jeden der Partikel festzustellen.

12. Verfahren zur Analyse einer Vielzahl von Partikeln (1) nach Anspruch 11, **dadurch gekennzeichnet, dass** bei Schritt (d) nach dem Aufbringen der chemischen Reagenzien ein optisches Mikroskop verwendet wird, um die Art eines jeden der Partikel (1) zu bestimmen.

13. Verfahren zur Analyse einer Vielzahl von Partikeln (1) nach einem der Ansprüche 1 bis 12, **dadurch gekennzeichnet, dass** bei Schritt (e) ein Elektronenmikroskop und ein Spektrometer verwendet werden, um in jeder Kategorie die metallurgische Struktur und die chemische Zusammensetzung von einem oder mehreren der Partikel (1) zu bestimmen.

## Claims

1. A method of analyzing a plurality of ferromagnetic particles (1), the method being **characterized in that** it comprises the following steps:
a) placing the particles (1) in a container (10), then aligning the particles (1) of said plurality in such a manner that each of said particles is oriented substantially in the same direction;
b) fixing the particles (1) of said plurality in said alignment by pouring a material (40) into said container, which material coats said particles so that they become embedded therein, and on solidifying fixes said particles in an aligned position;
c) exposing the internal regions of said particles (1) as aligned in this way;
d) determining the nature of the alloy constituting each of said particles (1) and grouping said particles by category as a function of their natures; and
e) after step d), in each category, determining the metallurgical structure and the chemical composition of one or more of said particles (1).

2. A method of analyzing a plurality of particles according to claim 1, **characterized in that**, in step a), all of the particles are aligned in a single step.

3. A method of analyzing a plurality of particles according to claim 1 or claim 2, **characterized in that**, in step c), the internal regions of said particles (1) are exposed in a single step.

4. A method of analyzing a plurality of particles (1) according to any one of claims 1 to 3, **characterized in that** each of said particles (1) extends in a main plane (P), and **in that**, in step a), said main planes are all put substantially into alignment.

5. A method of analyzing a plurality of particles (1) according to any one of claims 1 to 4, **characterized in that**, in step a), said particles are aligned by placing them in a magnetic field in a region of the field where the field lines (L) of the magnetic field are parallel.

6. A method of analyzing a plurality of particles (1) according to claim 5, **characterized in that**, in order to place said particles in said magnetic field, said particles are placed in a non-magnetic container (10) placed above a magnet (30).

7. A method of analyzing a plurality of particles (1) according to claim 6, **characterized in that** a non-magnetic spacer (20) is interposed between said magnet (30) and said container (10).

8. A method of analyzing a plurality of particles (1) according to any one of claims 1 to 7, **characterized in that**, in step c), the internal region of each of said particles (1) is exposed by cutting the particles in a plane perpendicular to their alignment direction.

9. A method of analyzing a plurality of particles (1) according to any one of claims 1 to 8, **characterized in that**, in step a), said particles (1) are spaced apart before being aligned.

10. A method of analyzing a plurality of particles (1) according to claim 9, **characterized in that** said particles (1) are placed in a demagnetizer in order to space them apart.

11. A method of analyzing a plurality of particles (1) according to any one of claims 1 to 10, **characterized in that**, in step d), one or more chemical reagents is/are applied to said particles (1) in order to reveal the nature of each of said particles.

12. A method of analyzing a plurality of particles (1) according to claim 11, **characterized in that**, in step d), an optical microscope is used after applying said chemical reagent so as to determine the nature of each of said particles (1).

13. A method of analyzing a plurality of particles (1) according to any one of claims 1 to 12, **characterized in that**, in step e), an electron microscope and a spectrometer are used in order to determine, in each category, the metallurgical structure and the chemical composition of one or more of said particles (1).
